# EUROPEAN PATENT SPECIFICATION

(11) **EP 4 361 686 B1**
(45) Date of publication and mention of the grant of the patent: **22.07.2026**
(21) Application number: 23194466.1
(22) Date of filing: 31.08.2023
(51) Int. Cl.: G02B 5/02, B32B 17/10

(54) **A HYBRID DIFFUSER AND METHOD OF MANUFACTURE**
HYBRIDDIFFUSOR UND HERSTELLUNGSVERFAHREN
DIFFUSEUR HYBRIDE ET PROCÉDÉ DE FABRICATION

(30) Priority: 26.09.2022 US 202217952634
(43) Date of publication of application: 01.05.2024
(73) Proprietor: Viavi Solutions Inc., Chandler, AZ 85286 (US)
(72) Inventor: ARGOITIA, Alberto, California, 95405 (US); ZIEBA, Jaroslaw, California, 95405 (US); LIANG, Kangning, California, 95404 (US); SALES, Tasso R. M., New York, 14623 (US); SEYDEL, Johannes P., California, 94952 (US)
(74) Representative: Murgitroyd & Company

(56) References cited:
- US-A- 3 813 265
- US-A1- 2022 235 235
- US-A1- 2022 299 678
- US-B2- 10 563 841
- US-B2- 10 732 479

## Description

### FIELD OF THE INVENTION

The present disclosure generally relates to a hybrid diffuser, comprising: a diffuser material having a planar side opposite a surface with a surface profile, and comprising, within a volume of the diffuser material and on the surface profile of the diffuser polymer, at least one optical material. Methods of making the hybrid diffuser are disclosed. A system can include a light source; and the hybrid diffuser. A method of using the system is also disclosed.

### BACKGROUND OF THE INVENTION

Diffusers are optical components that find use in a variety of applications to provide both homogenization and beam shaping functions. A broad classification of diffusers includes surface diffusers and volume diffusers.

Surface diffusers rely on a surface-relief profile at the interface between two media, such as glass or polymer and air to scatter radiation by refraction at the interface between two media. In particular, surface diffusers can have controlled scattering based upon a precise height and size distribution of the surface scatter centers, e.g., the surface profile. Surface diffusers are usually efficient for shaping light on transmission. However, the light and energy distribution obtained with surface diffusers can be compromised by unwanted 'ghosts", i.e., diffracted rays inherent from the surface profile of the surface diffuser. In particular, surface diffusers can fail to provide a high degree of illumination uniformity. A well-known example of a surface diffuser is ground glass, which is inexpensive and readily available commercially, although very limited in its beam shaping capabilities.

Volume diffusers, on the other hand, are composed of particles embedded within the volume of a material matrix. Scatter of light is obtained by particles and/or voids (gas phase) that are distributed within the volume of the material matrix. Volume diffusers are generally less efficient for shaping light on transmission as compared to surface diffusers. In fact, volume diffusers tend to produce intensity patterns that are not very uniform in terms of intensity distributions. A common example of a volume diffuser is opal glass, which can generate a Lambertian illumination pattern (which constitutes an intensity profile that is described by a cosine function as a function of angle) but with very low efficiency, generally transmitting about 20% of the input luminous energy. Other volume diffusers that are not as strong as opal glass tend to produce intensity profiles that exhibit a Lorentzian intensity profile. Also, differently from opal glass, these weaker volume diffusers can provide much higher efficiency.

What is needed is an article, such as a hybrid diffuser, such as a volume diffuser in combination with a surface diffuser, as a single component, to maximize output uniformity. For example, the volume related aspect of a hybrid diffuser can allow for introduction of additional desired optical and non-optical functionalities. Furthermore, implementing layer-by-layer structures using precisely distributed layered nano/microparticles of different sizes and optical materials with different optical properties can give the opportunity to add other properties such as high optical refractive media, antireflection, wavelength selection/dichroic, chemical, mechanical properties, etc.

US 2022/299678A, US 3813265A, US 10563841B, US 2022/235235A and US 10732479B are also useful in understanding the present invention.

A hybrid diffuser according to the invention is defined in claim 1. A method of making a hybrid diffuser according to the invention is defined in claim 13.

### BRIEF DESCRIPTION OF THE DRAWINGS

Features of the present disclosure are illustrated by way of example and not limited in the following figure(s), in which like numerals indicate like elements, in which:
FIG. 1 illustrates a hybrid diffuser according to an aspect of the invention;
FIG. 2 illustrates a hybrid diffuser according to another aspect of the invention;
FIGs. 3A-B illustrate an orientation for a diffuser material and an optical material to generate a surface profile;
FIGs. 4A-B illustrate an orientation for a diffuser material and an optical material to generate a surface profile;
FIGs. 5A-B illustrate an orientation for a diffuser material and an optical material to generate a surface profile;
FIG. 6 illustrates an orientation for a diffuser material and an optical material to generate a surface profile;
FIG. 7A is a system including the hybrid diffuser according to an aspect of the invention;
FIG. 7B a system including the hybrid diffuser according to another aspect of the invention;
FIG. 8 is a mold with a negative surface profile used in a method according to an aspect of the invention;
FIG. 9 is a mold including a first layer of charged optical material, and a second layer of oppositely charged optical material;
FIG. 10 illustrates the layering to form a planar surface;
FIG. 11 illustrates a hybrid diffuser according to an aspect of the invention;
FIG. 12 illustrate the hybrid diffuser mounted on a substrate with an optional functional coating;
FIGs 13A-C illustrate a surface diffuser and its intensity profile;
FIGs. 14A-B illustrate a volume diffuser and its intensity profile;
FIGs. 15A-B illustrate the intensity profile of the hybrid diffuser; and
FIG. 16 illustrates polarization of a hybrid diffuser.

### SUMMARY OF THE INVENTION

In a first aspect, there is disclosed a hybrid diffuser as defined in claim 1.
In a second aspect, there is disclosed a system as defined in claim 8.
In a third aspect, there is disclosed a method of using a system as defined in claim 9.

In a fourth aspect, there is disclosed a method of making a hybrid diffuser as defined in claim 13.

Additional features and advantages of various embodiments will be set forth, in part, in the description that follows, and will, in part, be apparent from the description, or can be learned by the practice of various embodiments. The objectives and other advantages of various embodiments will be realized and attained by means of the elements and combinations particularly pointed out in the description herein.

### DETAILED DESCRIPTION OF THE INVENTION

For simplicity and illustrative purposes, the present disclosure is described by referring mainly to an example thereof. In the following description, numerous specific details are set forth in order to provide a thorough understanding of the present disclosure. It will be readily apparent however, that the present disclosure may be practiced without limitation to these specific details. In other instances, some methods and structures have not been described in detail so as not to unnecessarily obscure the present disclosure.

Additionally, the elements depicted in the accompanying figures may include additional components and some of the components described in those figures may be removed and/or modified without departing from scopes of the present disclosure. Further, the elements depicted in the figures may not be drawn to scale and thus, the elements may have sizes and/or configurations that differ from those shown in the figures.

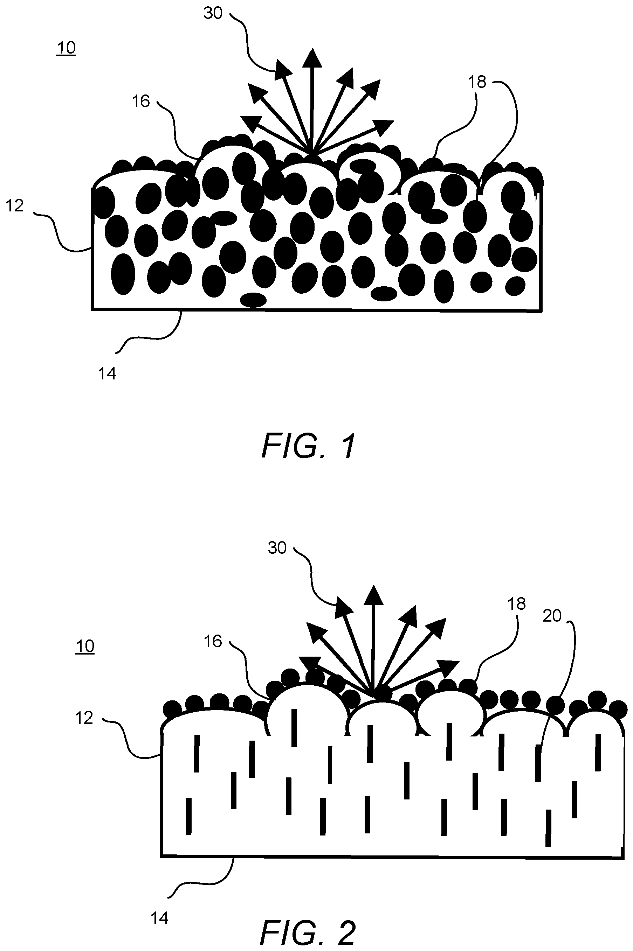

It is to be understood that both the foregoing general description and the following detailed description are exemplary and explanatory only, and are intended to provide an explanation of various embodiments of the present teachings. In its broad and varied embodiments, disclosed herein is a hybrid diffuser 10, comprising: a diffuser material 12 having a planar surface 14 opposite a surface with a surface profile 16, and comprising, within a volume of the diffuser material 12 and on the surface profile 16 of the diffuser material, at least one optical material 18, as shown in FIG. 1.

The diffuser material 12 can be any transparent material. The diffuser material 12 can be used as a matrix for including within its volume at least one optical material 18. The diffuser material 12 can be formed and/or take a shape that includes a surface profile 16. The diffuser material 12 can be any curable polymer. Non-limiting examples of a suitable diffuser material 12 include thermoplastics, such as polyesters, polyolefins, polycarbonates, polyamides, polyimides, polyurethanes, acrylics, acrylates, polyvinylesters, polyethers, polythiols, silicones, fluorocarbons, and various co-polymers thereof; thermosets, such as epoxies, polyurethanes, acrylates, melamine formaldehyde, urea formaldehyde, and phenol formaldehyde; energy curable materials, such as acrylates, epoxies, vinyls, vinyl esters, styrenes, and silanes; and combinations thereof. Additional diffuser materials 12 include, but are not limited to, silanes, siloxanes, titanates, zirconates, aluminates, silicates, phosphazanes, polyborazylenes, and polythiazyls.

The polymer chains of a diffuser material 12 can be crosslinked using a polymerization technique, and then cured. Non-limiting examples of a polymerization technique include photoinduced polymerization, such as free radical polymerization, spectrally sensitized photoinduced free radical polymerization, photoinduced cationic polymerization, spectrally sensitized photoinduced cationic polymerization, and photoinduced cycloaddition; electron beam induced polymerization, such as electron beam induced free radical polymerization, electron beam induced cationic polymerization, and electron beam induced cycloaddition; and thermally induced polymerization, such as thermally induced cationic polymerization. In an aspect, the diffuser material 12 can be deposited on a substrate 40 or formed in a mold 32 having a negative surface profile, and then cross-linked and/or cured using a technique such as a non-radical cure system, an ultraviolet light, a visible light, an infrared light, heat, chemical-induced and/or an electron beam.

The diffuser material 12 can have a bottom surface, such as a planar surface 14, that can interface with a top surface of a substrate 40. The diffuser material 12 has surface with a surface profile 16, opposite said planar surface (14). The surface profile 16 can be a random surface profile, a periodic surface profile, and/or a patterned surface profile. The surface profile 16 can be created by methods such as stamping, embossing, molding, or reactive-ion etching.

The surface profile 16 can be defined by a height and size distribution of scatter centers. The surface profile of the diffuser material 12 can have a physical thickness greater than 0 nm, i.e., it is not just a planar top surface of the diffuser material 12. For example, the surface profile 16 of the diffuser material 12 can have a physical thickness sufficient to include a depth of a microstructure. The surface profile 16 of the diffuser material 12 can have a physical thickness from about 5 microns to about 500 microns, for example, from about 10 microns to about 200 microns, and as a further example from about 40 microns to about 100 microns, including all ranges and sub-ranges in between.

The diffuser material 12 includes within a volume of the diffuser material 12 at least one optical material 18. The diffuser material 12 includes on the surface profile 16 of the diffuser material 12 at least one optical material 18. The diffuser material 12 includes within a volume of the diffuser material 12 and on the surface of the diffuser material 12 at least one optical material 18.

The at least one optical material 18 can provide optical functions that are not provided by the diffuser material 12 or a surface profile 16 alone. Non-limiting examples of properties include, but are not limited to, light scattering, electrical and/or magnetic properties, fluorescent properties, IR to visible light converting properties (low energy incident light creates higher energy), electrochromic, thermochromic, wavelength dependent absorption, thin film interference, diffractive interference, polarization control, and combinations thereof. The combination of the optical functions from the optical material 18 and the surface profile 16, and the non-optical functions from the diffuser material 12 can enable designs for a hybrid diffuser 10 that can respond to outside influences, such as temperature, pressure, electric and/or magnetic fields, motion, gravity, radiation, etc., and combinations thereof.

The at least one optical material 18 can be present in an organic phase or an inorganic phase. The at least one optical material 18 can be in a form of a particle (nanoparticle or microparticle), a rod 20, wire, fibers, filaments, ribbons, elliptical, other shapes, and combinations thereof. In an aspect, the at least one optical material 18 can be an assembly of particles in which a particle size ranges from about 20 nm to about 1000 nm, for example, from about 30 nm to about 900 nm, and as a further example from about 40 nm to about 800 nm. In an aspect, the at least one optical material 18 can be present in the diffuser material 12 as embedded particles (randomly or specifically placed) within the volume of the diffuser material 12, as a particle layer within the diffuser material 12, or as particles on the surface profile 16 of the diffuser material 12.

The at least one optical material 18 can be orientable in an applied field, as discussed further below. The at least one optical material 18 can have a shape chosen from linear, circular, spiral, and combinations thereof. As shown in FIG. 2, in an aspect, the at least one optical material 18 can be a metallic rod 20 oriented in a configuration chosen from linear, circular, spiral and combinations thereof. In particular, the metallic rod can be oriented in relation to an orientation of the surface profile 16. The rod dimensions, as well as the diffuser material 12, can affect how much energy is transmitted by the hybrid diffuser 10. As will be discussed in more detail below, the metallic rod 20 can be dispersed in the diffuser material 12, and oriented in a magnetic field prior to curing of the diffuser material 12.

The diffuser material 12 can include within the volume of the diffuser material 12 a plurality of elongated particles of optical material 18 that can be responsive to external electrical fields. The elongated particles of optical material 18 can be polarized and can align parallel to an applied electrical field. For example, polarized ellipsoidal particles can align with the major axes parallel to the field. This alignment is regardless if the elongated particles are solid or hollow.

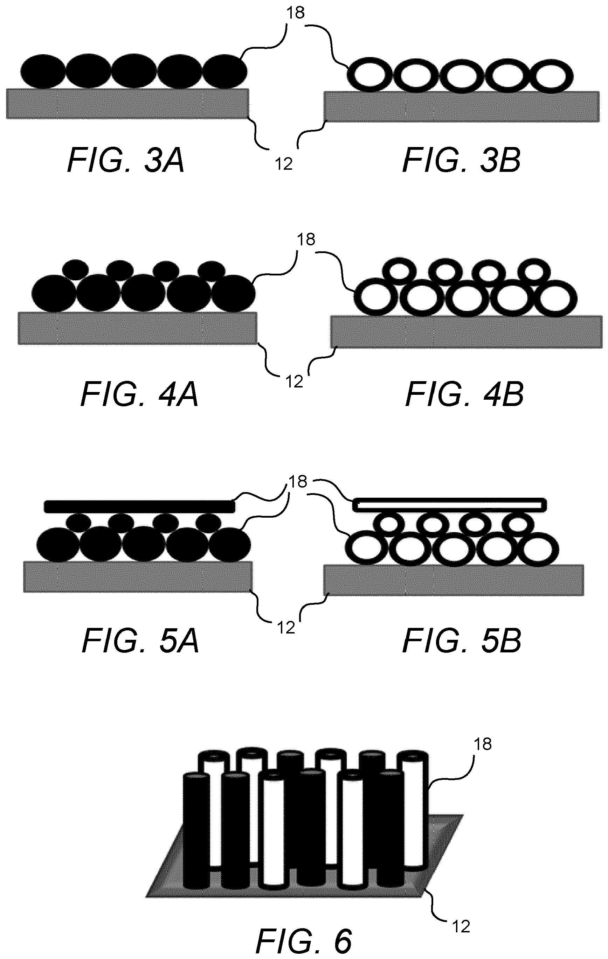

Non-limiting examples of elongated particles of optical material 18 include wires, fibers, filaments, ribbons, elliptical, other shapes, and combinations thereof. The elongated particles of optical material 18 can be produced using electro-spinning and/or centrifugal force spinning with a variety of optical materials 18, such as polymers, ceramics, metallic, and their combinations). In an aspect, the elongated particles of optical material 18 can be fibers, such as hollow fibers with diameters ranging from nanometer to micrometer ranges, for example, 10 nm to 10 µm. Elongated particles of optical material 18, in the form of hollow fibers, can includes channels, such as one or more channels, for example, 2, 3, 4, or 5 channels. A hybrid diffuser 10 including within a volume of the diffuser material 12 the elongated particles of optical material 18 can create a large variety of photonic responses. As shown in FIG. 6, elongated particles of optical material 18, such as hollow and solid elongated particles, can be aligned perpendicular to a surface of the hybrid diffuser 10. In this manner, the optical properties of the hybrid diffuser 10 can be highly influences by the angle of incident light.

The diffuser material 12 can be porous, i.e., can include space within the volume of the diffuser material 12 that can be void of the at least one optical material 18. The at least one optical material 18 can have a size that can create Mie scattering (produced when the molecules, particles, or voids sizes are larger than the wavelength of the incident light) or Rayleigh scattering (when the wavelength of the incident light is larger than the size of the molecules, particles, or voids).

In an aspect, when present on the surface profile 16, the at least one optical material 18 can have a size smaller than the at least one optical material 18 present within a volume of the diffuser material 12, as shown in FIG. 1. In this manner, the at least one optical material 18 is present on the surface profile 16 in a form of a plurality of protrusions that are smaller in scale relative to the surface profile 16. These protrusions can be engineered to provide anti-reflection properties. Additionally, the protrusions of optical material 18 on the surface profile 16 can provide super hydrophobicity (e.g., self-cleaning/lotus effect).

The surface profile 16 can be formed using elongated particles of optical material 18, such as solid and/or hollow elongated structures, as shown in FIGs. 3A and 3B. The coating density can be varied, such as increased, by successively depositing different diameters of elongated particles of optical material 18 to create the surface profile 16 of the diffuser material 12, as shown in FIGs. 4A and 4B. The surface profile 16 can also be obtained with successive layers of elongated particles of optical material 18, in which different layers are oriented in different directions. As shown in FIGs. 5A and 5B, a first layer includes elongated particles of optical material 18 having a first (large) diameter and oriented in a first direction, a second layer including elongated particles of optical material 18 having a second (smaller) diameter and oriented in the first direction, and a third layer including elongated particles of optical material 18 have a third (smallest) diameter and oriented in a second direction, which is different from the first direction. It can be appreciated that any combination of diameters, materials, solid, hollow elongated particles of optical material 18 can be used and in any orientation. These variables can be chosen based upon specific photonic properties, mechanical, tribological, catalytic of the hybrid diffuser 10.

In an embodiment not according to the invention, the at least one optical material 18 can be a metallic material. Non-limiting examples of a metallic material include aluminum, palladium, silver, titanium, iron, cobalt, copper, tin, gold, nickel, their alloys; metal compounds involving carbon, oxygen, nitrogen, and their combination; and combinations thereof.

The at least one optical material 18 can be an inorganic material, for example, present in the hybrid diffuser 10 in a layer or as particles forming a layer. Non-limiting examples of a suitable inorganic material include SiO₂, TiO₂, Al₂O₃, ZrO₂, WO₃, VOs, ITO, Ta₂O₅, CeO₂, Y₂O₃, ZnS, ZnO, In₂O₃, La₂O₃, MgO, Nd₂O₃, Pr₆O₁₁, Fe₂O₃, Fe₃O4, SiO, SnO₂, FeOₓ, MgF₂, AlF₃, CeF₃, LaF₃, LiF, CaF₂, cermets, diamond-like carbon, and combinations thereof. Metal oxides can be noted as MOx in which M is a metal, O is oxygen, and x can be a fraction, when used in a non-stoichiometric compound.

The at least one optical material 18 can be an absorbing material capable of acting as a uniform or selective absorber at different wavelength. Non-limiting examples of an absorbing material include carbon, graphite, silicon, germanium, cermet, metals mixed in a dielectric matrix, Inconel, stainless steel, hastelloys, and combinations thereof.

The at least one optical material 18 can be an organic colored material. Non-limiting examples of an organic colored material include perylene, perinone, quinacridone, quinacridonequinone, anthrapyrimidine , anthraquinone, anthanthrone, benzimidazolone, disazo condensation, azo, quinolones, xanthene, azomethine, quinophthalone, indanthrone, phthalocyanine, triarylcarbonium, dioxazine, aminoanthraquinone, isoindoline , diketopyrrolopyrrole, thioindigo, thiazineindigo, isoindoline, isoindolinone, pyranthrone, isoviolanthrone, miyoshi methane, triarylmethane, and mixtures thereof.

According to the invention, the at least one optical material 18 is a liquid crystal polymer. The liquid crystal polymer (LCP) can be one or more solidified polymeric liquid crystal components. The LCP can have a color that depends on the viewing angle, and can be composed of oriented, three-dimensionally crosslinked substances of liquid-crystalline structure with a chiral phase. The LCP structures can be obtained by subjecting one or more three-dimensionally crosslinkable liquid-crystalline substances with a chiral phase to orientation, then to three-dimensional crosslinking, and subsequently to comminution to the desired particle size. The LCP structures obtained are platelet-like particles comprising the cross-linked substance of a liquid crystal structure (i.e., the polymeric or monomeric fluid prior to crosslinking was in an ordered state of the liquid crystal type). Alternatively, the LCP structures can be formed by coating platelet-like particles with a liquid crystal material. The LCP structure can be made from a precursor composition comprising at least one nematic compound and at least one chiral dopant compound.

The hybrid diffuser 10 can also include a functional coating 38. The functional coating 38 can be present on a top surface, such as the surface profile 16, of the hybrid diffuser 10. The functional coating 38 can also provide protection and optical functions in addition to those provided by the at least one optical material 18 present in the hybrid diffuser 12.

The hybrid diffuser 10 can include multilayer optical designs with different optical purposes such as dichroic filtering, anti-reflection, by-pass filters, etc. The volume of the hybrid diffuser 10 could be produced with a multilayer design based on different types of particles of optical material 18. If desired, the density of particles of optical material 18 can also be varied for each layer. Or each layer can be obtained with different percentages of particles and or particles sizes. The flexibility of having different type, sizes, repartition, layers and thicknesses, etc. of the optical material 18 allows for the production of a hybrid diffuser 10 with specific engineered performance for different wavelengths, intensities and applications. As an example, an antireflection multilayer design with high and low index particles could be integrated in the volume of the diffuser material 12. The particle's density, arrangement, size, optical properties, and the layer's thicknesses can be optimized for the wavelengths where the antireflection characteristics are required. Furthermore, the fact that it is possible to change the density of the rigid solid particles in a more flexible diffuser material 12 make it possible to change the hybrid diffuser's 10 dimensions (stretch or compress) and therefore tune its optical properties. A dichroic diffuser can be integrated in the volume of the diffuser material 12. In this case, a high/low multilayer optical design based on nanoparticles can filter not only the spatial distributions but also some of desired or undesired light wavelengths.

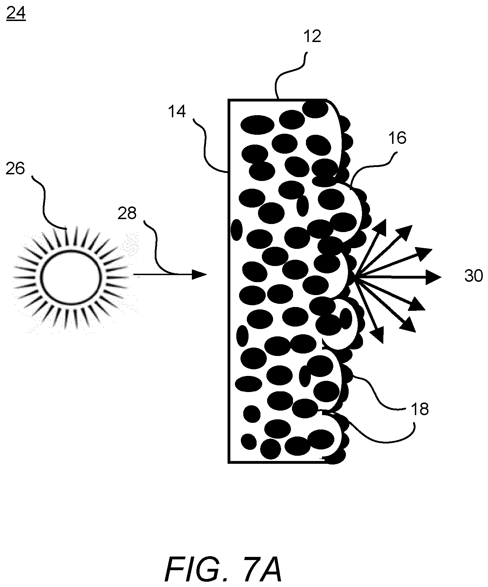

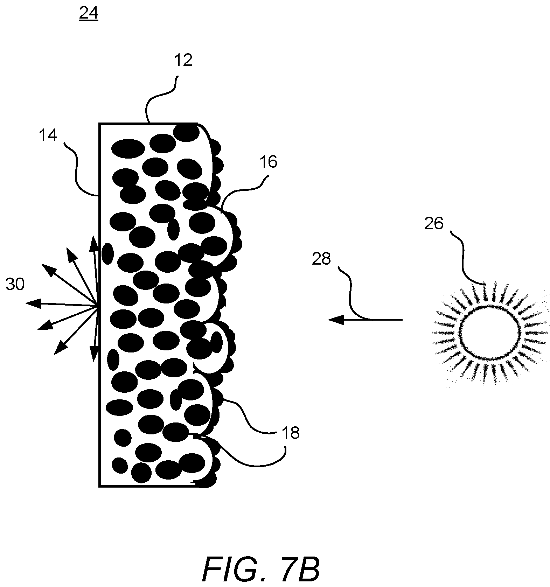

As shown in FIGs. 7A and 7B, a system 24 can include a light source 26 and the hybrid diffuser 10, as described above with regard to FIG. 1. The light source 26 can emit light 28 that is received by the hybrid diffuser 10. The light source 26 can emit light 28 in a wavelength range from ultraviolet to far infrared.

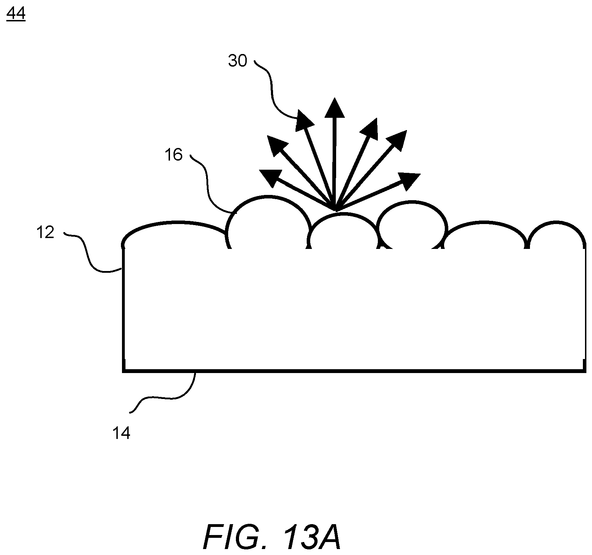

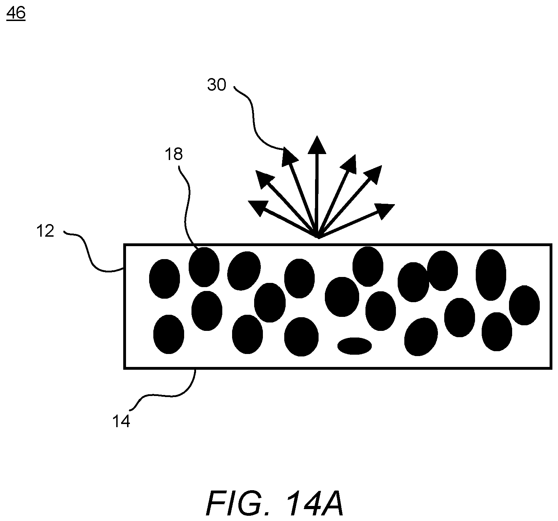

A method of using the system 24 includes illuminating a light source 26 so that light 28 emits from the light source; and receiving the light emitted from the light source 26 in the hybrid diffuser 10. In an aspect, the hybrid diffuser 10 can include a surface profile 16 and/or within a volume of diffuser material 12 at least one optical material 18 (e.g., a scatter component) that can combine to provide the illumination output 30. The presence of the at least one optical material 18 within the volume of the diffuser material 12 can modify the illumination output 30 that would otherwise be observed from a surface diffuser alone. In simple terms, the modified scatter profile due to the volume contribution can be described as the convolution of the surface scatter alone and the contribution of the volume scatter alone. The general result is that modified scatter profile can exhibit improved homogenization characteristics compared to a surface diffuser (as shown in FIG. 13A) or a volume diffuser (as shown in FIG. 14A) alone. The hybrid diffuser 10 can include a liquid crystal polymer as the at least one optical material 18, wherein the liquid crystal polymer can provide active scatter and polarization control. In an aspect, the hybrid diffuser 10 can include metallic rods as the optical material 18, wherein the metallic rods can provide passive polarization and intensity control. The hybrid diffuser 10 can be a linear polarizer, a spectral band-gap, or a cut-off filter. The hybrid diffuser 10 can also exhibit temperature control because the optical material 18 can provide electric conductivity when present in an applied field.

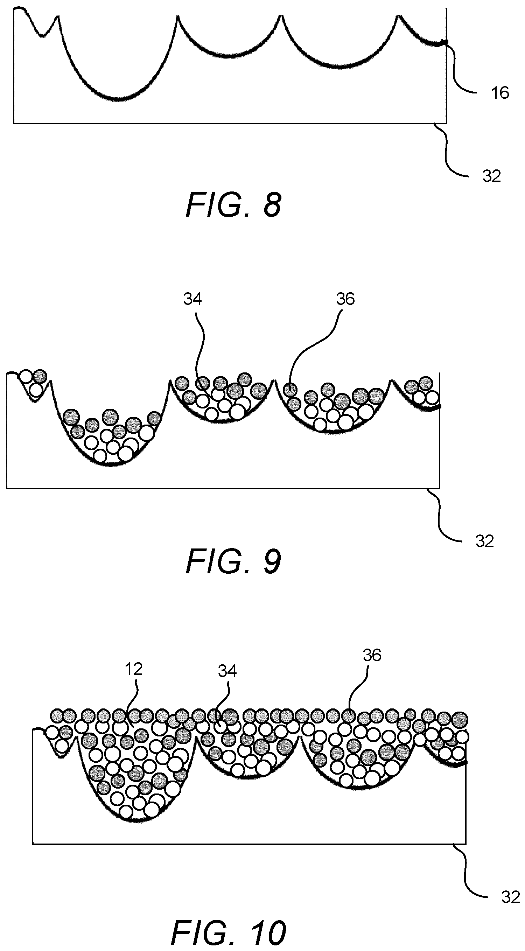

There is also disclosed a method of making a hybrid diffuser including providing a mold 32 having a negative surface profile; forming a first layer of charged optical material 34 on the negative surface profile of the mold; and forming a second layer of oppositely charged optical material 36 on a surface of the first layer. As shown in FIG. 8, the mold 32 can include a negative surface profile 16. The mold 32 can be used with a layer-by-layer deposition of optical material 18, in which a first layer can be a charged optical material 34 and a second layer can be an oppositely charged optical material 36, as shown in FIG. 9. The method can include adding additional layers of charged optical material 34 alternated with additional layers of an oppositely charged optical material 36 to obtain a planar surface, as shown in FIG. 10. In this manner, bilayers of optical material 18 (charged/oppositely charged) can be deposited in the mold 32. The bilayers of optical material 18 can be bilayers of inorganic/organic optical materials 18.

In an aspect, the method can include filling the mold 32 with a diffuser material 12 to obtain a planar surface 14. In this manner, the diffuser material 12 is a liquid and the charged optical material 34 and the oppositely charged optical material 36 are dispersed in the diffuser material 12.

The method can include applying a field to the hybrid diffuser 10. The applied field can be chosen from electrical, electromagnetic, magnetic, shear force, gravitational, and a combination thereof. The applied field can align the optical material 18 within the volume of the diffuser material 12. For example, metallic rods within the volume of the diffuser material 12 can be aligned in a magnetic field. As a further example, elongated particles of optical material 18 within the volume of the diffuser material 12 can be aligned in an electric field.

The method can include curing the formed layers (i.e., the first layer, the second layer, and any additional layers). The curing can fix the optical materials 18 that were aligned in the applied field (magnetic or electric). The curing techniques are disclosed above.

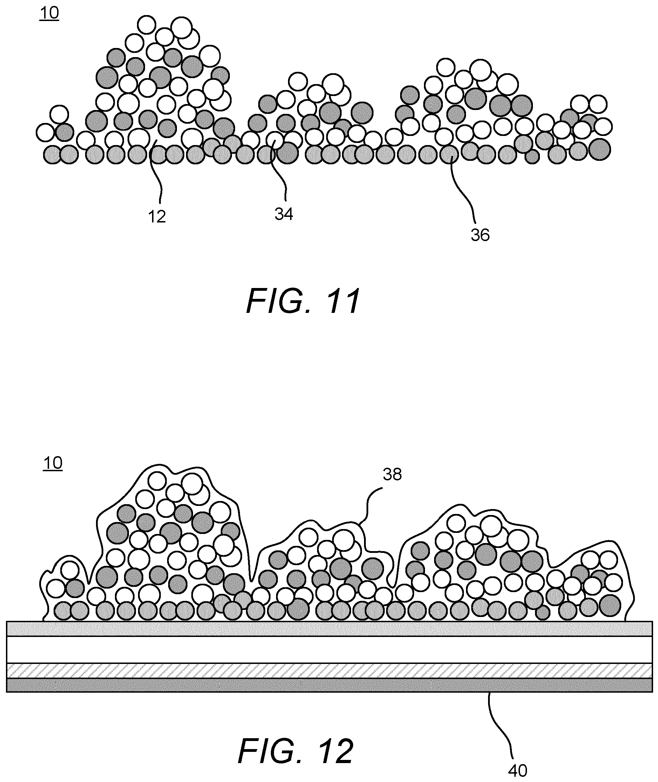

The method can also include removing the mold 32 from the cured, formed layers, as shown in FIG. 11.

The method can also include mounting the hybrid diffuser 10 to a substrate 40, as shown FIG. 12. The substrate 40 can include one or more layers depending upon the application of the hybrid diffuser 10.

Depending upon the application, the method can include providing a functional coating 38 to a surface profile of the hybrid diffuser 10. The functional coating 38 can be applied using deposition processes such as PVD, CVD, layer-by-layer, ALD, wet chemical precipitations, sol-gel and the like.

In an aspect, there is disclosed a method of making a hybrid diffuser 10 comprising providing a substrate 40; depositing a diffuser material 12 comprising at least one optical material 18 using a liquid coating process, wherein the liquid coating process exhibits a shear force that aligns the at least one optical material 18; curing the deposited diffuser material 12; and providing a surface profile 16 to the cured diffuser material 12. In this manner, the diffuser material 12 can include elongated particles or rod-like liquid crystal polymers so that the resultant hybrid diffuser 10 can have polarized light pass the surface diffuser. The elongated particles or rod-like liquid crystal polymers can be aligned due to the shear force resulting from use of a slot die. After evaporation of any solvent, and curing of the diffuser material 12, a surface profile 16 can be formed by using a mold or by embossing.

### EXAMPLES

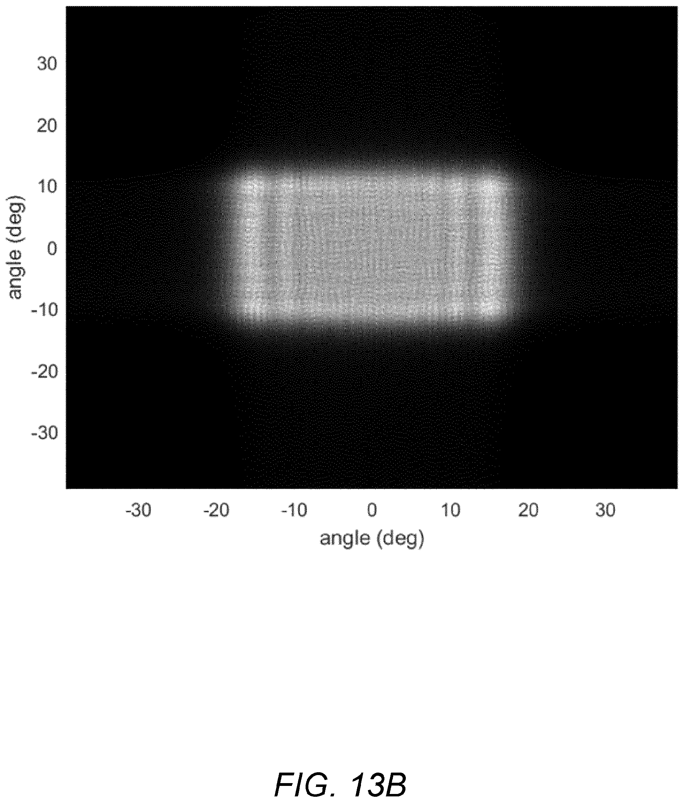

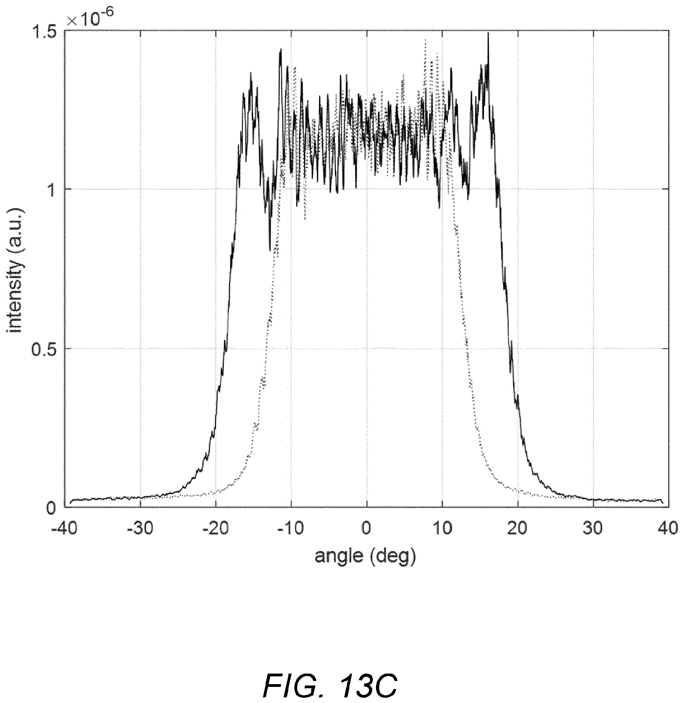

COMPARATIVE EXAMPLE 1 - As shown in FIG. 13A, a surface diffuser 44 included a diffuser material 12 having a planar surface 14 opposite a surface with a surface profile 16. This surface diffuser 44 was a microlens-based surface diffuser that produced a rectangular field of view of about 37 x 26 degrees as illustrated as shown in FIG. 13B, as viewed with a detector size of 0.25° under coherent illumination. As shown in FIG. 13C, the cross-sections through the x and y axis are also shown where the solid line is along the wide axis and the dotted line is along the narrow axis. There are several uniformity aspects that were identified. The high-frequency components were originated from the presence of speckle. There was also a low-frequency non-uniformity that was easily identified in terms of lines and stripes that conferred the image its particular scatter structure.

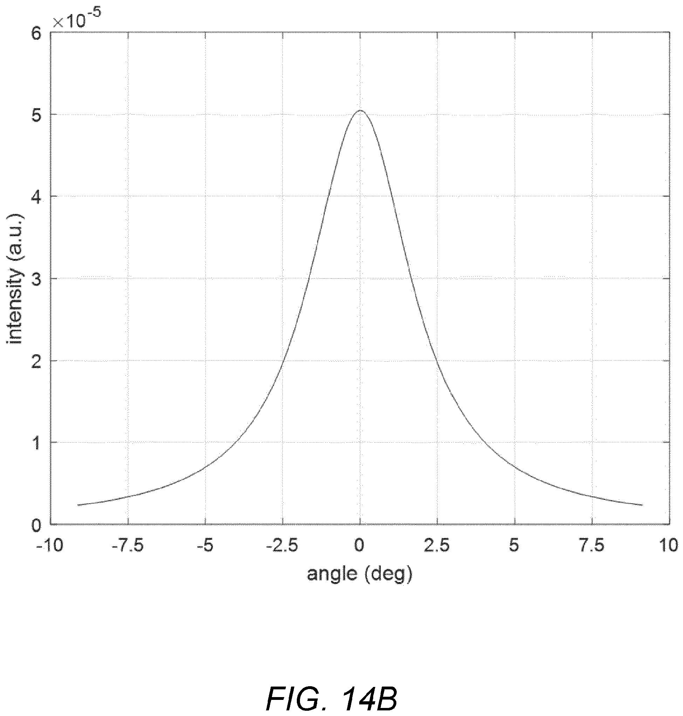

COMPARATIVE EXAMPLE 2 - To help minimize the structures observed in the Comparative Example 1 and FIGS. 13B and 13C, a volume diffuser was prepared, as shown in FIG. 14A. The volume diffuser 46 included a diffuser material 12 having planar surfaces 14 on all sides and including within the volume of the diffuser material at least one optical material 18. The volume diffuser of FIG. 14A generated a scatter profile with Lorentzian profile with full width at half-maximum of 4°, as shown in FIG. 14B.

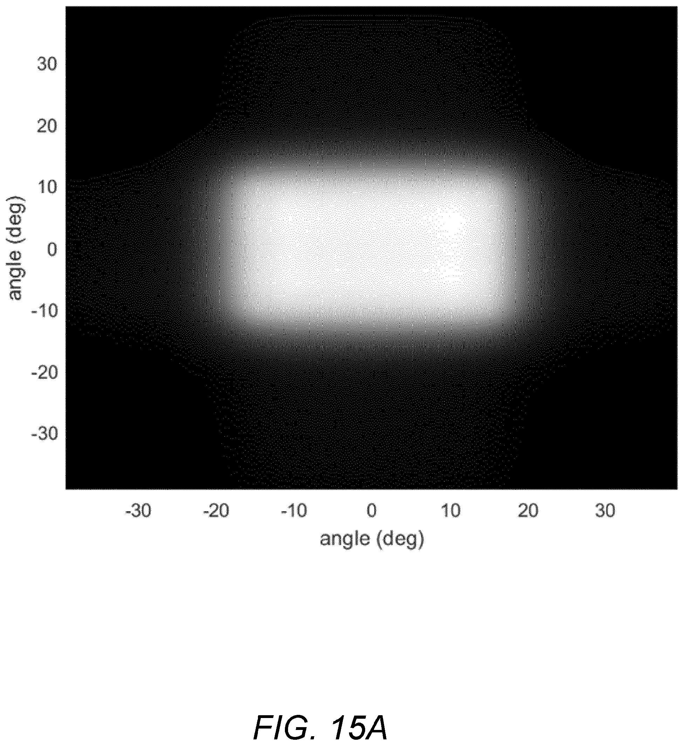

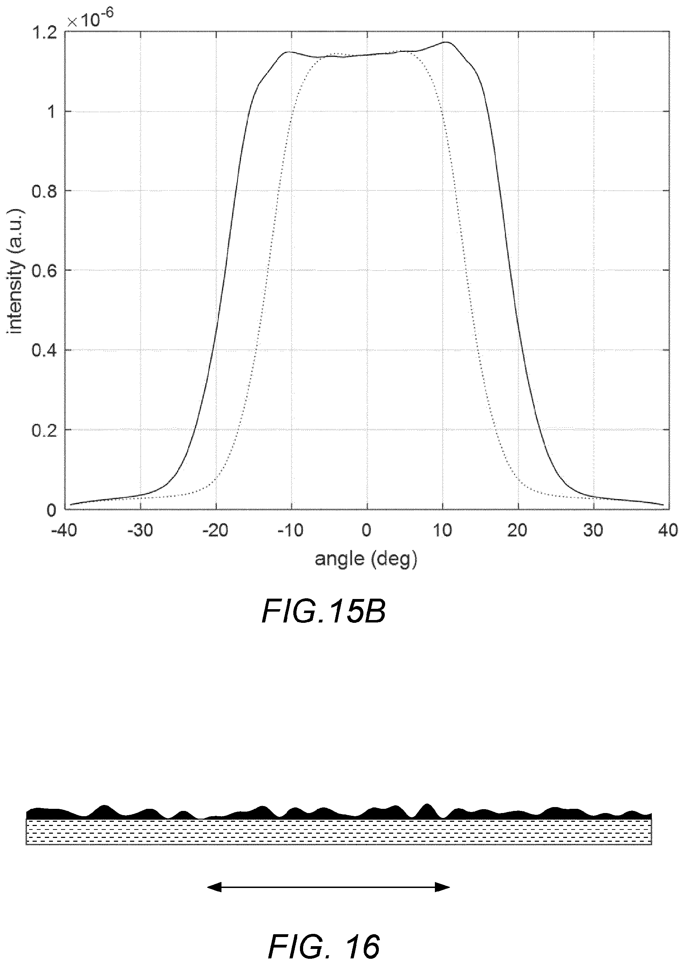

EXAMPLE 1 - A hybrid diffuser 10, as shown in FIG. 1, was prepared. The total output was calculated as the convolution between the surface diffuser pattern and the volume diffuser pattern, and is shown in FIG. 15A. As shown in FIG. 15B, the cross-sections through the x and y axis are also shown where the solid line is along the wide axis and the dotted line is along the narrow axis. The final output of the hybrid diffuser 10 provided superior uniformity. As long as the transmission efficiency of the hybrid diffuser 10 is sufficiently high the total transmission will be high as well. As an estimate, assuming the planar surface 14 of the surface diffuser 44 includes an anti-reflective coating the surface diffuser 44 transmission was estimated at 94%. Under the assumption of 85% total transmission for the volume diffuser 46, the total component transmission of the hybrid diffuser 10 would be 80%.

COMPARATIVE EXAMPLE 3 - With regard to polarization, surface diffusers 44, as shown in FIG. 13A, generally present the polarization state of an incoming illumination beam. A volume diffuser 46, as shown in FIG. 14A, can generally change an incoming illumination beam 28 into a different polarization state. As shown in FIG. 16, a hybrid diffuser 10 can include metallic micro or nano rods oriented along a direction as indicated by the arrow. An incident electric field that is aligned with the rods was substantially absorbed and only the perpendicular field was transmitted.

The present disclosure also discloses a method not defined in the claims of making a hybrid diffuser, such as any of the hybrid diffusers described herein. The method, as described herein, comprises: providing a substrate; depositing a diffuser material comprising at least one optical material using a liquid coating process, wherein the liquid coating process exhibits a shear force that aligns the at least one optical material; curing the deposited diffuser material; and providing a surface profile to the cured diffuser material. In an aspect, the at least one optical material provides optical properties chosen from light scattering, electrical and/or magnetic properties, fluorescent properties, IR to visible light converting properties (low energy incident light creates higher energy), electrochromic, thermochromic, wavelength dependent absorption, thin film interference, diffractive interference, polarization control, and combinations thereof.

From the foregoing description, those skilled in the art can appreciate that the present teachings can be implemented in a variety of forms. Therefore, while these teachings have been described in connection with particular embodiments and examples thereof, the true scope of the present teachings should not be so limited. Various changes and modifications can be made without departing from the scope of the teachings herein.

This scope disclosure is to be broadly construed. It is intended that this disclosure disclose equivalents, means, systems and methods to achieve the devices, activities and mechanical actions disclosed herein. For each device, article, method, mean, mechanical element or mechanism disclosed, it is intended that this disclosure also encompass in its disclosure and teaches equivalents, means, systems and methods for practicing the many aspects, mechanisms and devices disclosed herein. The claims of this application are likewise to be broadly construed. The description of the inventions herein in their many embodiments is merely exemplary in nature and, thus, variations that do not depart from the gist of the invention are intended to be within the scope of the invention. Such variations are not to be regarded as a departure from the claims and scope of the invention.

## Claims

1. A hybrid diffuser (10), comprising:
a diffuser material (12) having a planar surface (14) opposite a surface with a surface profile (16); and
at least one optical material (18) located within a volume of the diffuser material and on the surface profile of the diffuser material, wherein the at least one optical material is orientable, and wherein the at least one optical material is a liquid crystal polymer being one or more solidified polymeric liquid crystal components.

2. The hybrid diffuser (10) of claim 1, wherein the at least one optical material (18) is embedded in or on the diffuser in at least one of the following phases: an organic phase or an inorganic phase.

3. The hybrid diffuser (10) of claim 1 or claim 2, wherein the at least one optical material (18) is an assembly of particles, wherein a particle size ranges from about 20 nm to about 1000 nm.

4. The hybrid diffuser (10) of claim 1, claim 2 or claim 3, wherein the liquid crystal polymer has a shape chosen from linear, circular, spiral, and combinations thereof, and are solid or hollow elongate particles, or a combination thereof.

5. The hybrid diffuser (10) of any preceding claim, wherein the liquid crystal polymer has a color that depends on a viewing angle and is comprised of three-dimensionally crosslinked substances of liquid-crystalline structure with a chiral phase.

6. The hybrid diffuser (10) of any preceding claim, wherein the at least one optical material (18) is present on the surface profile (16) in a form of protrusions; and
wherein the protrusions are smaller in scale relative to the surface profile.

7. The hybrid diffuser (10) of any preceding claim, wherein the surface profile is defined by a height and size distribution of the scatter centers of the liquid crystal components of the diffuser material.

8. A system (24), comprising:
a light source (26); and
the hybrid diffuser (10) of any one of claims 1 to 7.

9. A method of using a system(24), comprising:
illuminating a light source (26) so that light emits from the light source; and
receiving the light emitted from the light source in the hybrid diffuser (10) of any one of claims 1 to 7.

10. The method of claim 9, wherein the hybrid diffuser (10) emits a modified scatter profile of light compared with a surface diffuser alone, based on a volume contribution of the at least one optical material (18) in and on the diffuser material (12).

11. The method of claim 9 or claim 10, wherein the hybrid diffuser (10) includes a liquid crystal polymer that provides active scatter and polarization control.

12. The method of claim 9, claim 10, or claim 11, wherein the hybrid diffuser (10) includes metallic rods that provide passive polarization and intensity control.

13. A method of making a hybrid diffuser (10) as defined in claim 1, comprising:
providing a mold (32) having a negative surface profile;
forming a first layer of charged optical material (34) on the negative surface profile of the mold;
forming a second layer of oppositely charged optical material (36) on a surface of the first layer; and
adding additional layers of a charged optical material alternated with additional layers of an oppositely charged optical material, on the first layer and second layer, until a planar surface is obtained.

14. The method of claim 13, further comprising filling the mold (32) with a diffuser material (12) so that the oppositely charged optical material (34) of the first layer, the second layer, or the additional layers are dispersed in the diffuser material.

15. The method of claim 13 or claim 14, further comprising:
a) providing a functional coating to a surface profile (16) of the hybrid diffuser (10);
b) mounting the hybrid diffuser to a substrate (40);
c) applying, to the hybrid diffuser, a field chosen from an electrical, electromagnetic, magnetic, shear force, gravitational, and a combination thereof; or
d) curing the formed layers.

## Patentansprüche

1. Ein Hybriddiffusor (10), der Folgendes beinhaltet:
ein Diffusormaterial (12) mit einer ebenen Oberfläche (14) gegenüber einer Oberfläche mit einem Oberflächenprofil (16); und
mindestens ein optisches Material (18), das sich innerhalb eines Volumens des Diffusormaterials und auf dem Oberflächenprofil des Diffusormaterials befindet, wobei das mindestens eine optische Material ausrichtbar ist und wobei das mindestens eine optische Material ein Flüssigkristallpolymer ist, bei dem es sich um eine oder mehrere verfestigte polymere Flüssigkristallkomponenten handelt.

2. Hybriddiffusor (10) gemäß Anspruch 1, wobei das mindestens eine optische Material (18) in oder auf dem Diffusor in mindestens einer der folgenden Phasen eingebettet ist: einer organischen Phase oder einer anorganischen Phase.

3. Hybriddiffusor (10) gemäß Anspruch 1 oder Anspruch 2, wobei das mindestens eine optische Material (18) eine Anordnung von Partikeln ist, wobei eine Partikelgröße in dem Bereich von etwa 20 nm bis etwa 1000 nm liegt.

4. Hybriddiffusor (10) gemäß Anspruch 1, Anspruch 2 oder Anspruch 3, wobei das Flüssigkristallpolymer eine Form aufweist, die aus linear, kreisförmig, spiralförmig und Kombinationen davon ausgewählt ist, und feste oder hohle längliche Partikel oder eine Kombination davon sind.

5. Hybriddiffusor (10) gemäß einem der vorhergehenden Ansprüche, wobei das Flüssigkristallpolymer eine von einem Betrachtungswinkel abhängende Farbe aufweist und aus dreidimensional vernetzten Substanzen mit flüssigkristalliner Struktur mit einer chiralen Phase besteht.

6. Hybriddiffusor (10) gemäß einem der vorhergehenden Ansprüche, wobei das mindestens eine optische Material (18) auf dem Oberflächenprofil (16) in Form von Vorsprüngen vorliegt; und
wobei die Vorsprünge im Verhältnis zu dem Oberflächenprofil kleiner sind.

7. Hybriddiffusor (10) gemäß einem der vorhergehenden Ansprüche, wobei das Oberflächenprofil durch eine Höhen- und Größenverteilung der Streuzentren der Flüssigkristallkomponenten des Diffusormaterials definiert ist.

8. Ein System (24), das Folgendes beinhaltet:
eine Lichtquelle (26); und
den Hybriddiffusor (10) gemäß einem der Ansprüche 1 bis 7.

9. Ein Verfahren zum Verwenden eines Systems (24), das Folgendes beinhaltet:
Beleuchten einer Lichtquelle (26), sodass Licht von der Lichtquelle emittiert wird; und
Empfangen des von der Lichtquelle emittierten Lichts in dem Hybriddiffusor (10) gemäß einem der Ansprüche 1 bis 7.

10. Verfahren gemäß Anspruch 9, wobei der Hybriddiffusor (10) ein modifiziertes Streuprofil von Licht im Vergleich zu einem Oberflächendiffusor allein emittiert, basierend auf einem Volumenbeitrag des mindestens einen optischen Materials (18) in und auf dem Diffusormaterial (12).

11. Verfahren gemäß Anspruch 9 oder Anspruch 10, wobei der Hybriddiffusor (10) ein Flüssigkristallpolymer umfasst, das aktive Streu- und Polarisationssteuerung bereitstellt.

12. Verfahren gemäß Anspruch 9, Anspruch 10 oder Anspruch 11, wobei der Hybriddiffusor (10) Metallstäbe umfasst, die passive Polarisations- und Intensitätssteuerung bereitstellen.

13. Ein Verfahren zum Herstellen eines Hybriddiffusors (10) gemäß Anspruch 1, das Folgendes beinhaltet:
Bereitstellen einer Form (32) mit einem negativen Oberflächenprofil;
Bilden einer ersten Schicht aus geladenem optischem Material (34) auf dem negativen Oberflächenprofil der Form;
Bilden einer zweiten Schicht aus entgegengesetzt geladenem optischem Material (36) auf einer Oberfläche der ersten Schicht; und
Hinzufügen zusätzlicher Schichten aus einem geladenen optischen Material, die sich mit zusätzlichen Schichten aus einem entgegengesetzt geladenen optischen Material abwechseln, auf der ersten Schicht und der zweiten Schicht, bis eine ebene Oberfläche erhalten wird.

14. Verfahren gemäß Anspruch 13, das ferner das Füllen der Form (32) mit einem Diffusormaterial (12) beinhaltet, sodass das entgegengesetzt geladene optische Material (34) der ersten Schicht, der zweiten Schicht oder der zusätzlichen Schichten in dem Diffusormaterial dispergiert ist.

15. Verfahren gemäß Anspruch 13 oder Anspruch 14, das ferner Folgendes beinhaltet:
a) Bereitstellen einer funktionellen Beschichtung auf einem Oberflächenprofil (16) des Hybriddiffusors (10);
b) Montieren des Hybriddiffusors auf einem Substrat (40);
c) Anlegen, an den Hybriddiffusor, eines Feldes, das aus einem elektrischen, elektromagnetischen, magnetischen, einem Scherkraftfeld, einem Gravitationsfeld und einer Kombination davon ausgewählt ist; oder
d) Härten der gebildeten Schichten.

## Revendications

1. Un diffuseur hybride (10), comprenant :
un matériau diffuseur (12) présentant une surface plane (14) à l'opposé d'une surface dotée d'un profil de surface (16) ; et
au moins un matériau optique (18) situé à l'intérieur d'un volume du matériau diffuseur et sur le profil de surface du matériau diffuseur, l'au moins un matériau optique étant orientable, et l'au moins un matériau optique étant un polymère à cristaux liquides qui est un ou plusieurs composants polymères solidifiés à cristaux liquides.

2. Le diffuseur hybride (10) de la revendication 1, dans lequel l'au moins un matériau optique (18) est incorporé dans ou sur le diffuseur en au moins une des phases suivantes : une phase organique ou une phase inorganique.

3. Le diffuseur hybride (10) de la revendication 1 ou de la revendication 2, dans lequel l'au moins un matériau optique (18) est un assemblage de particules, dans lequel une taille de particule va d'environ 20 nm à environ 1 000 nm.

4. Le diffuseur hybride (10) de la revendication 1, de la revendication 2 ou de la revendication 3, dans lequel le polymère à cristaux liquides présente une forme choisie parmi une forme linéaire, circulaire, en spirale, et des combinaisons de celles-ci, et sont des particules allongées pleines ou creuses, ou une combinaison de celles-ci.

5. Le diffuseur hybride (10) de n'importe quelle revendication précédente, dans lequel le polymère à cristaux liquides présente une couleur qui dépend d'un angle de vue et est composé de substances réticulées tridimensionnellement de structure à cristaux liquides dotées d'une phase chirale.

6. Le diffuseur hybride (10) de n'importe quelle revendication précédente, dans lequel l'au moins un matériau optique (18) est présent sur le profil de surface (16) sous forme de saillies ; et
dans lequel les saillies sont à plus petite échelle par rapport au profil de surface.

7. Le diffuseur hybride (10) de n'importe quelle revendication précédente, dans lequel le profil de surface est défini par une distribution de hauteur et de taille des centres de dispersion des composants à cristaux liquides du matériau diffuseur.

8. Un système (24), comprenant :
une source lumineuse (26) ; et
le diffuseur hybride (10) de l'une quelconque des revendications 1 à 7.

9. Un procédé d'utilisation d'un système (24), comprenant :
l'éclairage d'une source lumineuse (26) de sorte que de la lumière est émise depuis la source lumineuse ; et
la réception de la lumière émise depuis la source lumineuse dans le diffuseur hybride (10) de l'une quelconque des revendications 1 à 7.

10. Le procédé de la revendication 9, dans lequel le diffuseur hybride (10) émet un profil de dispersion de lumière modifié par rapport à un diffuseur de surface seul, sur la base d'une contribution volumique de l'au moins un matériau optique (18) dans et sur le matériau diffuseur (12).

11. Le procédé de la revendication 9 ou de la revendication 10, dans lequel le diffuseur hybride (10) inclut un polymère à cristaux liquides qui fournit une commande active de dispersion et de polarisation.

12. Le procédé de la revendication 9, de la revendication 10, ou de la revendication 11, dans lequel le diffuseur hybride (10) inclut des tiges métalliques qui fournissent une commande passive de polarisation et d'intensité.

13. Un procédé de fabrication d'un diffuseur hybride (10) tel que défini dans la revendication 1, comprenant :
la fourniture d'un moule (32) présentant un profil de surface négatif ;
la formation d'une première couche de matériau optique chargé (34) sur le profil de surface négatif du moule ;
la formation d'une deuxième couche de matériau optique de charge opposée (36) sur une surface de la première couche ; et
l'ajout de couches supplémentaires d'un matériau optique chargé en alternance avec des couches supplémentaires d'un matériau optique de charge opposée, sur la première couche et la deuxième couche, jusqu'à ce qu'une surface plane soit obtenue.

14. Le procédé de la revendication 13, comprenant en outre le remplissage du moule (32) avec un matériau diffuseur (12) de sorte que le matériau optique de charge opposée (34) de la première couche, de la deuxième couche, ou des couches supplémentaires soit dispersé dans le matériau diffuseur.

15. Le procédé de la revendication 13 ou de la revendication 14, comprenant en outre :
a) la fourniture d'un revêtement fonctionnel sur un profil de surface (16) du diffuseur hybride (10) ;
b) le montage du diffuseur hybride sur un substrat (40) ;
c) l'application au diffuseur hybride d'un champ choisi parmi un champ électrique, un champ électromagnétique, un champ magnétique, un champ de force de cisaillement, un champ gravitationnel, et une combinaison de ceux-ci ; ou
d) le durcissement des couches formées.
